# EUROPÄISCHE PATENTSCHRIFT

(11) **EP 0 833 685 B1**
(45) Veröffentlichungstag und Bekanntmachung des Hinweises auf die Patenterteilung: **09.02.2000**
(21) Anmeldenummer: 96918583.4
(22) Anmeldetag: 08.06.1996
(51) Int. Cl.: B01D 25/127, B01D 29/09

(54) **FILTRATIONSANLAGE ZUR TRENNUNG VON FESTSTOFFTEILCHEN**
FILTRATION SYSTEM FOR REMOVING SOLID PARTICLES
INSTALLATION DE FILTRATION POUR LA SEPARATION DE PARTICULES DE MATIERE SOLIDE

(30) Priorität: 19.06.1995 DE 19522133
(43) Veröffentlichungstag der Anmeldung: 08.04.1998
(73) Patentinhaber: Franze, Ulrich, 45701 Herten (DE)
(72) Erfinder: Franze, Ulrich, 45701 Herten (DE)
(86) Internationale Anmeldenummer: DE9601065
(87) Internationale Veröffentlichungsnummer: WO9700111

(56) Entgegenhaltungen:
- EP-A- 0 241 623
- EP-A- 0 479 315
- DD-A- 135 446
- DE-A- 3 703 696
- US-A- 3 306 458

## Beschreibung

Die Erfindung betrifft eine Filtrationsanlage zu Trennung von Feststoffteilchen aus Flüssigkeiten mit einer Deckplatte und einer an der Unterseite der Deckplatte anliegenden Filtrationseinrichtung.

Es sind mechanische Trennverfahren und Vorrichtungen zur Abscheidung von meist festen Teilchen aus Flüssigkeiten oder Suspensionen und von nichtlöslichen Flüssigkeitströpfchen aus einer anderen Flüssigkeit oder Emulsion mit Hilfe poröser Filtermittel, welche als flaches Gebilde wie Filtertücher oder Drahtgewebe oder dicke Schichten aus Kiesschüttung ausgebildet sind, bekannt. Die treibende physikalische Kraft bei der Filtration ist der durch das Gewicht der über dem Filter stehenden Flüssigkeitssäule hervorgerufene Druckunterschied zwischen der Zulauf- und Ablaufseite des Filters; die Kraft kann jedoch auch durch Pressen auf der Zulaufseite oder Anlegen von einem Unterdruck auf derAblaufseite (Druck- oder Vakuumfiltration) hervorgerufen zumindest verstärkt werden.

Mittels z.B. automatischer Filterpressen wird versucht, die Filtrationsverfahren zu verkürzen und auch die Rüstzeiten zum Ersetzen oder Abscheiden des Filterkuchens zu verkürzen. Beispielsweise kann man bei der automatischen Kammerfilterpresse, welche über horizontale übereinander angeordnete Filterkammern und ein als endloses Band ausgestaltetes Filtertuch verfügt, die Filterplatten durch eine elektromechanische Öffnungs- und Schließvorrichtung gleichzeitig abwärts- oder aufwärts bewegen. Hierbei wird der Filterkuchen auf dem Filtertuch seitwärts abgeschieden und durch ein neues von einem der seitlich angebrachten Rollelemente abgespultes Filtertuch ersetzt.

Es hat sich jedoch gezeigt, daß bei der herkömmlichen automatischen vertikalen Kammerfilterpresse mit beweglichen Filterplatten ein gleichmäßiges Hoch- und Abfahren der Filterplatten mittels der an der Seite der Filterplatten angeordneten Hubsysteme nicht in hinreichender Weise erfolgte, so daß Undichtigkeiten bei den mit hohem Druck beaufschlagten Filtrationskammern auftreten. Insbesondere lassen sich Undichtigkeiten an den die Filtrationskammern seitlich abzudichtenden Dichtungselementen beobachten Die Undichtigkeiten können auch durch ein Ausstatten der Filterkammern mit hochelastischen Dichtungselementen nicht verhindert werden, da es sich zeigt, daß je höher elastisch ein Dichtungselement ist, um so höher ist die Gefahr der Brüchigkeit des Materials und damit umso geringer ist die Lebensdauer der Dichtungselemente Die Führung des endlosen Filtertuches ist ebenfalls schwierig und beinhaltet ein aufwendiges Rollensystem, d.h. viele bewegliche Teile, die zu einer Störanfälligkeit führen.

Die Druckfilter mit feststehenden rechteckkanalartigen Filterkammern, deren gegenüberliegenden Öffnungen mit schlauchartigen Dichtungen für den Filtrationsvorgang verschlossen werden können, haben den Nachteil, daß das auf dem perforierten Boden der Kammer liegende Filtertuch mit stetigem Betrieb wellige Konturen bekommt, wodurch Feststoffdurchschläge eintreten. Auch führt ein nicht zu vermeidender S-förmiger Verzug des Filtertuches zu erhöhtem Verschleiß der Kanten beim Verfahren des Tuches bzw. zu Filtrationstotzonen.

Unter Filtrationstotzonen sind solche Bereiche der Filterplatte zu verstehen, welche zwar von dem Filtertuch bedeckt sind, jedoch keine Poren bzw Einlaß für das Filtrat aufweisen.

Kammerfilterpressen mit horizontal verschiebbaren Filterplatten haben den Nachteil, daß die Filtertücher nicht verfahren werden können, um den Kuchenaustrag zu verbessern und eine effektive Tuchwaschung nach jedem Filtrationsvorgang zum Schutz vor Erblinden durchzuführen.

Unter Erblinden ist das Verstopfen der Poren des Filtertuches zu verstehen.

Die in der DE 37 03 696 A1 offenbarte Kammerfilterpresse enthält zwei Endplatten, zwischen denen sich ein Satz von Filterplatten befindet, um die der Reihe nach ein geschlossenes Filtertuchband herumläuft, das mit Hilfe von Rollen gespannt ist. Diese sind in Nuten von an den Platten unbeweglich befestigen Kragarmen bewegbar angeordnet. Weiterhin weist die Kammerfilterpresse eine Vorrichtung zum Andrücken des Satzes der Filterplatten sowie Sammelleitungen zur Zu- und Ableitung der zu trennenden Medien auf. Hierbei zeigt der Nachteil sich, daß die von dem laufenden Filtertuchband erzeugte Belastung von den Platten zwar abnimmt, jedoch Spannelemente stark belastet werden.

Die US PS 50 94 760 beschreibt lediglich eine nichtkontinuierlich zu befahrende Filtrationsanlage mit mehreren vertikalen, unbeweglich nebeneinander angeordneten Filterplatten, deren Zwischenräume mit zu filtrierenden Medien beaufschlagt werden Die Zwischenräume sind an zwei gegenüberliegenden Seiten fest verschlossen, oben und unten mit schlauchartigen Dichtungen für den Filtrationsvorgang verschließbar. Weiterhin ist mittig zwischen den Filterplatten jeweils eine doppelseitige Membran eingebracht, die zum Nachpressen des beim Filtrationsvorgang entstandenen Filterkuchens mit einem Druckmedium beaufschlagt werden kann. Hierbei können jedoch aufgrund der unzureichenden Abdichtung der Filtermedien gegen die Filterplatten an den geschlossenen Seiten der Zwischenräume Feststoffdurchschläge auftreten und eine frühzeitige Erblindung des Filtertuchs durch einseitige Waschung auftreten.

Aus der Patentschrift DD-A-135446 ist eine Vorrichtung mit einer Kombination von mehreren hintereinandergeschalteten Filtrationseinrichtungen bekannt, die aus jeweils einer Deckplatte mit umlaufendem fllexiblem Dichtungselement, einer parallel dazu angeordneten beweglichen Filterplatte mit umlaufendem flexiblem Dichtungselement und zwei zwischen den Platten, eine Filterkammer bildenden Filtertüchern bestehen, wobei die Filtertücher endlos geschlossen hintereinander die Filtrationseinrichtungen durchlaufen und die Filterplatte mittels eines Hydraulikzylinders vertikal zur Längsachse der Deckplatte verfahren und somit die Filterkammer geschlossen bzw. geöffnet wird sowie ein Auspressen des bei der Filtration entstandenen Filterkuchens möglich ist. Diese Vorrichtung erscheint dem Fachmann jedoch aus mehreren Gründen als technisch nicht realisierbar, so ist auch eine Realisierung bisher nicht bekannt.

Aufgabe der vorliegende Erfindung ist es, nicht nur die o. g. Nachteile des Stands der Technik zu beseitigen, sondern auch eine universell einsetzbare Filtrationsanlage zu schaffen, die aufgrund ihres einfachen Aufbaus kostengünstig erstellbar und zu betreiben ist und somit auch für Umweltschutzaufgaben betriebswirtschaftlich günstig einsetzbar ist. Zudem sollte es möglich sein, daß nach der Filtration der Suspension oder der Flüssigkeit im Falle des Entstehens eines kompressiblen Filterkuchen die Möglichkeit besteht, diesen gleichmäßig auszupressen.

Daher ist es wünschenwert, eine Filtrationsanlage bereitzustellen, welche ein unter Arbeitsbedingungen gleichmäßig beabstandetes Hoch- und Abfahren der Filterplatten unter Andrücken derselben gegen die Deckplatten ermöglicht. Weiterhin wäre es von Vorteil, daß eine höhere Entfeuchtung eines kompressiblen Filterkuchens durch einen zusätzlichen Preßvorgang mit bereits vorhandenen Einrichtungen erfolgt, so daß die Verwendung von aufwendigen Membranen, welche in herkömmlichen Filtrationsanlagen die Filterkuchen zusammenpressen, nicht erforderlich gemacht wird.

Ebenso sollte es möglich sein, daß eine kontinuierliche Filtration ermöglicht wird, wobei bei Filtrationsbetrieb ein Auswechseln von Filtertüchern und / oder Abscheiden des Filterkuchens ermöglicht wird, ohne daß der der gesamte Filtrationsprozeß gestört, verlangsamt oder gar unterbrochen werden muß. Hierbei ist es erstrebenswert, daß die Filtrationsanlage leicht handhabbar verschiedenste Filtrationsverfahren ohne nennenswerte Umbauten ermöglicht, wie parallel oder hintereinander geschaltete Filtration.

Die Aufgabe wird gelöst durch den Hauptanspruch. Die Unteransprüche betreffen bevorzugte Ausführungsformen.

Die Filterplatte ist im wesentlichen parallel zu der Deckplatte ausgerichtet, da gewisse geringe Abweichungen ihrer Lage aufgrund der Flexibilität der Dichtungselemente auftreten können. Die Dichtungselemente vermögen auch als Abstandshalter zwischen der Filterplatte und der Deckplatte zu wirken, wenn die Filterplatte z.B bei Filtrationsbetrieb mittels der Hubelemente gegen die Dichtungselemente gedrückt werden. Minimale Unterschiede in der Form- oder Verformbarkeit der Dichtungselemente können aufgrund ihrer Materialbeschaffenheit auftreten, wobei jedoch eine Einschränkung des Erfolgs der vorliegenden Erfindung nicht zu beobachten ist.

Auch kann ein geringer Unterschied in der Lage der Filterplatte aufgrund der durch elastisches Material bedingten unterschiedlichen Verformbarkeit der Hubelemente auftreten, ein Umstand, der jedoch ebenso den überragenden Erfolg der vorliegenden Erfindung nicht einschränkt, zumal die Möglichkeit besteht, die Lage der Filterplatte z.B. im Falle der Verwendung von druckbeaufschlagbaren Dichtungselementen durch unterschiedliche Druckbeaufschlagung dieser die Lage der Filterplatte entsprechend zu verändern.

Z.B. können die vorzugsweise flexiblen Hubelemente Formkissen wie Luftkissen sein, die als groß- und / oder kleinflächige verwendbar sind. Ebenfalls ist es möglich, als flexible Hubelemente Schläuche zu verwenden.

Ein verwendbarer Schlauch kann dergestalt ausgebildet sein, daß z.B der Umfang des Schlauchs im Querschnitt vor der Druckbeaufschlagung -im entspannten Zustand- und bei Druckbeaufschlagung im wesentlichen unverändert bleibt, hingegen die Form der Querschnittsfläche des Schlauchs vor bzw. bei Druckbeaufschlagung eine unterschiedliche ist. Z.B zeigt ein als Hubelement verwendbarer gewebeverstärkter Schlauch zwar im entspannten Zustand eine veränderliche Querschnittsform, aber sein Umfang im Querschnitt bleibt im wesentlichen unverändert.

Unter einem flexiblen Hubelement kann ein Hohlkörper mit elastischen Wänden aus elastischem Material zu verstehen sein, welcher unter Druckbeaufschlagung im Querschnitt seinen Durchmesser vergrößert und bei fehlendem Druck seinen Durchmesser verringert aufgrund der z.B. Eigenelastizität oder Eigenspannung seines Materials

Die flexiblen Hubelemente sind zwischen der Filterplatte und der Standplatte derart angebracht, daß die flexiblen Hubelemente aufgrund ihrer durch Druckbeaufschlagung hervorgerufenen Verformbarkeit den Abstand zwischen der Deckplatte und der Filterplatte bei Druck verringern durch das Auffahren der Filterplatte senkrecht zu der Längsachse der Deckplatte in Richtung Deckplatte -also aufwärts-. Bei Druckablaß verringert sich z.B. der Durchmesser der flexiblen Hubelemente und die Filterplatte fährt in Richtung Standplatte -also abwärts-. Durch die Anordnung der flexiblen Hubelemente verbleibt die Filterplatte beim Auf- und Abfahren hierbei im wesentlichen parallel ausgerichtet zu der Längsachse der Deckplatte.

Es zeigt sich, daß es von Vorteil ist, wenn die Schläuche ihren Durchmesser mittels Druckbeaufschlagung verändern und bei der Beaufschlagung der Schläuche mit einem definierten Druck dieselben eine in etwa übereinstimmende Form im Querschnitt aufweisen Die erfindungsgemäße Filtrationsanlage ermöglicht durch die Verwendung von Schläuchen, welche durch Druckbeaufschlagen verformbar sind, eine gleichmäßige Kraftverteilung auf die Filterplatte, so daß diese in gerade zu idealer Weise an die Deckplatte gefahren werden kann.

Zudem erweist es sich, daß durch die Verwendung von elastischen Schläuchen die Filterplatten nach der Filtration bei kompressiblem Filterkuchen hinreichend derartig gleichmäßig in Richtung der Deckplatte gedrückt werden können, daß der Filterkuchen durch Zusammenpressen so stark entwässert wird, daß eine ausreichende Trocknung oder Entfeuchtung des Filterkuchens sich ermöglichen läßt, ohne daß es noch zusätzlich erforderlich ist, im Gegensatz zu herkömmlichen Filtersystemen aufwendige Membranen zu verwenden.

In einer Ausführungsform des erfindungsgemäßen Gegenstandes können die Schläuche parallel, mäanderformig und / oder auch kreisförmig angeordnet sein. Vorzugsweise sind die Schläuche in etwa parallel zueinander angeordnet. Die Anordnung der Schläuche ist abhängig von der Ausgestaltung der z.B. Filterplatte als Rundfilter oder rechteckig geformter Filter Von Vorteil ist es, wenn die Schläuche untereinander druckmediummäßig z. B. mittels Verbindungsschläuche in Verbindung stehen. Diese Verbindungsschläuche als auch die Verteilerrohre können von gleicher Gestalt, Material und Größe wie die Schläuche beschaffen sein, so daß auch hierbei ein gleichmäßiges Einwirken der durch die Schläuche hervorgerufene Andruckkraft auf die Filterplatte gewährleistet ist, mit welcher die Filterplatte gegen die Deckplatte über die Dichtungselemente gedrückt wird.

In einer weiteren Ausführungsform der erfindungsgemäßen Filtrationsanlage können die Schläuche mittels der Druck erzeugenden Einrichtung über ein Druckmedium, vorzugsweise Luft, Wasser und / oder ölhaltige Flüssigkeiten, beaufschlagt werden. Die Verwendung der Druckmedien ist abhängig von dem Verwendungszweck der Filtrationsanlage, wobei jedoch Luft oder Wasser, insbesondere Luft, sich als zweckmäßig erweist, um z.B. die Korrosion der Druck erzeugenden Einrichtung möglichst gering zu halten. Als Druck erzeugende Einrichtung können jegliche Arbeitsmaschinen verwendet werden, die die ihr von einer Antriebsaggregat zugeführte Energie dem Gas und / oder Flüssigkeit mitteilt, wie Elektropumpen oder dergleichen mehr.

Die Filterplatten der erfindungsgemäßen Filtrationsanlage sind so beschaffen, daß diese für die Flüssigkeit durchgängig sind, was vorzugsweise dadurch ermöglicht wird, daß die Filterplatte porös ist Die Poren der Oberseite der Filterplatte sind zumindest teilweise über Kanäle miteinander verbunden, wobei die Flüssigkeit über die Kanäle und /oder über die an der Unterseite der Filterplatte angeordneten Poren in einen Filtratablauf fließen. Bei der Filtration gelangt beispielsweise die von Feststoffen befreite Flüssigkeit durch das Filtermittel über die auf der Oberseite der Filterplatte angeordneten Poren mittels Kanäle zu den an der Unterseite angeordneten Poren. Vorzugsweise kann bei der erfindungsgemäßen Filtrationsanlage die Filterplatte mit Poren ausgebildet sein, wobei ein Teil der Poren über Kanäle miteinander in Verbindung stehen und die Kanäle ausgangsseitig mit einem Filtratablauf und die Kanäle eingangsseitig mit der Filtrationskammer in Verbindung stehen.

Von Vorteil ist es, daß die Schläuche, welche sich an der Unterseite der Filterplatte befinden, derartig mit Druck beaufschlagt werden, daß diese sich vorzugsweise im Querschnitt gesehen bezüglich ihres Durchmessers verformen. Jedoch ist eine Verformbarkeit in ihrer Länge nicht störend.

Als Filtermittel kann jegliches bandförmiges flaches Gebilde wie Tuch aus Gewebe oder Vlies wie Metall-, Natur-, Kunststoff- und Glasfasern, Filter-, Filtrierpapiere, oder Filtermembranen wie aus Cellulosederivaten, Keramik oder Kunststoffen Verwendung finden. Auf zwei gegenüberliegenden Seiten der Filtrationsanlage bzw Filtrationseinrichtung können Rollelemente angebracht sein, welche das Filtermittel führen und unter Umständen dieses auf- bzw abspulen können. Das Filtermittel wird auf der Filterplatte der erfindungsgemäßen Filtrationsanlage derartig geführt, daß die gesamte Fläche der Filterplatte als Auflage für das Filtermittel dient und Toträume nicht auftreten, welche herkömmlicherweise die Filtrierfläche einzuschränken vermögen.

Zudem zeigt es sich als Vorteil, daß bei der erfindungsgemäßen Filtrationsanlage zwei oder mehrere Filtrationseinrichtungen kombiniert werden können. Hierbei ist dann die Standplatte der einen Filtrationseinrichtung als Deckplatte ausgebildet, so daß eine weitere Filtrationseinrichtung an der Unterseite dieser Deckplatte angeordnet ist bzw anliegt. Von Vorteil zeigt es sich hinzukommend, daß bei der erfindungsgemäßen Filtrationsanlage die Filtratabläufe eine gemeinsame Ausgangsleitung aufweisen können, so daß eine Parallelschaltung der Filtrationseinrichtungen ermöglicht wird. Hingegen ist es auch möglich, den Filtratablauf der einen Filtrationseinrichtung mit der Zugangsleitung der Filtrationskammer der weiteren Filtrationseinrichtung dergestalt zu verbinden, daß eine Hintereinanderschaltung der Filtrationseinrichtungen ermöglicht wird. Durch die Hintereinanderschaltung der Filtrationseinrichtungen kann eine stufenweise höhere Filtration ermöglicht werden.

Bei der Parallelschaltung der Filtrationseinrichtung kann ein kontinuierliches Verfahren ermöglicht werden, indem eine Filtrationseinrichtung gefahren wird, wohingegen bei einer weiteren der sich bereits angesammelte Filterkuchen nach Abfahren der Filterplatte und Auf- bzw. Abspulen des Filtermittels seitlich abgeschieden werden kann.

### Ausführungsbeispiele:

Ausführungsbeispiele werden in der nachfolgenden Beschreibung unter Bezugnahme auf die Zeichnungen beschrieben. Die Zeichnungen zeigen aufgrund der zeichnerischen Vereinfachung in schematischer, vergrößerter Weise ohne Anspruch auf eine maßstabsgetreue Wiedergabe in
- **Fig. 1**: die Seitenansicht auf die erfindungsgemäße Filtrationsanlage während der Filtration und mit Druckluft beaufschlagten Schläuche
- **Fig.2**: eine Seitenansicht auf die erfindungsgemäße Filtrationsanlage nach Filtration und Evakuieren der Schläuche
- **Fig.3**: eine Draufsicht auf die mit Filtermittel versehene Filterplatte

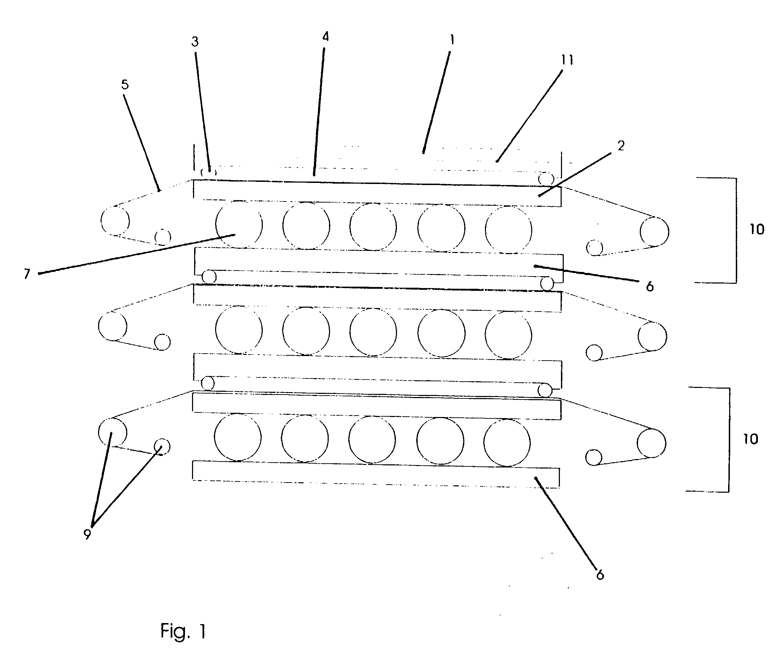

Die erfindungsgemäße Filtrationsanlage umfaßt eine Deckplatte 1. Unterhalb der Deckplatte 1 befindet sich parallel zu ihr eine Filterplatte 2 (Fig. 1). Elastische Dichtungselemente 3 aus herkömmlichen gummiähnlichen Material können auch als in ihrem Querschnitt bei Druckbeaufschlagung verformbare Schläuche ausgebildet sein, um die seitliche Abdichtung der Filterkammer 4 der erfindungsgemäßen Filtrationsanlage zu erhöhen. Z.B. können hierbei die Schläuche 7 und die als Schläuche ausgebildeten Dichtungselemente 3 miteinander in Verbindung stehen und mit Luft als Druckmedium gleichzeitig beaufschlagt werden.

Die Schläuche 3 sind derartig an der Unterseite der Deckplatte 1 angeordnet, daß bei der Druckbeaufschlagung der Schläuche 7 die Schläuche 3 auch die Filterplatte 2 gegen das Filtertuch 5 abdichten. Die Deckplatte 1 weist Zuleitungen auf, welche die zu filtrierende Flüssigkeit in die Filtrationskammer 4 zuzuführen vermögen. Auf der Unterseite der Filterplatte 2 befinden sich die parallel zueinander angeordnete Schläuche 7 z.B. aus silikon- und gummiähnlichem Material, welche elastisch sind. Die Druckbeaufschlagung erfolgt hierbei mittels Luft.

Der Schlauch 7 kann ein gewebeverstärkter aus handelsüblichem Kunststoff oder gummihaltigem Material hergestellter sein, dessen Querschnittsform bei Druckbeaufschlagung sich verändert, hingegen sein Querschnittsumfang im wesentlichen unverändert bleibt. Jedoch kann genauso ein nicht gewebeverstärkter Schlauch aus handelsüblichem Kunststoff oder gummihaltigem Material verwendet werden, bei dem sich sowohl sein Querschnittsumfang als auch seine Querschnittsform bei unterschiedlichem Druckzustand des Schlauchs verändert.

Durch die Druckbeaufschlagung wird die Filterplatte 2 in Richtung Deckplatte 1 gefahren, so daß die Filtrationskammer 4 zu ihren Seiten über die Dichtungselemente 3 abgedichtet ist und kein Austritt der unter Druck stehenden zu filtrierenden Flüssigkeit festzustellen ist.

Wesentlich ist, daß die Filterplatte 2 im wesentlichen parallel zur Deckplatte senkrecht zu ihrer Längsachse verschiebbar ist, so daß eine hinreichende Abdichtung der Filterkammer 4 gewährleistet ist.

Auf der Oberseite der Filterplatte 2 befindet sich ein Filtertuch 5 handelsüblicher Qualität. Dieses Filtertuch 5 wird auf Rollenelementen 9 umgelenkt und auf Spulen oder dergleichen auf- bzw. abgespult. Die zu filtrierende Flüssigkeit gelangt über Zuleitungen durch die Deckplatte 1 in die Filterkammer 4, wird unter Druck durch das Filtertuch 5 gepreßt und gelangt über die Filtratabläufe in einen Sammelbehälter. Nach Bildung eines geeigneten Filterkuchens kann das noch in der Filtrationskammer 4 befindliche Filtrat mittels Druckbeaufschlagung über die in der Deckplatte 1 befindlichen Zuleitungen durch den Filterkuchen in die Filterplatte 2 gedrückt werden und der Filterkuchen durch Lufteinblasen in die Filtrationskammer 4 weiter entwässert werden. Auch ist es möglich, bei einem kompressiblen Filterkuchen durch eine weitere höhere Druckbeaufschlagung der Schläuche 7 den Abstand zwischen der Deckplatte 1 und der Filterplatte 2 unter Verformung der Dichtungselemente 3, eventuell auch durch Druckentlastung dieser Dichtungselemente 3, derart zu verringern, daß ein Auspressen des Filterkuchens durchführbar ist. Die auf der Unterseite der Filterplatte 2 über Poren mündenden Kanäle der Filterplatte 2 führen zu dem oder den Filtratabläufen.

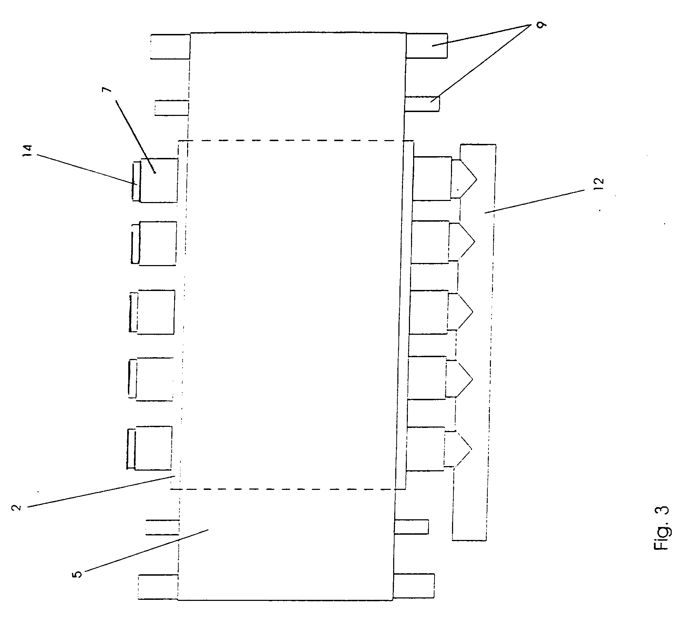

Die Schläuche 7 sind an einer ihrer Enden durch ein Verteilerrohr 12 verbunden (Fig. 3), welches mit einer Pumpe verbunden ist. Die anderen Enden der Schläuche 7 sind mittels Blindstopfen 14 dichtend verschlossen.

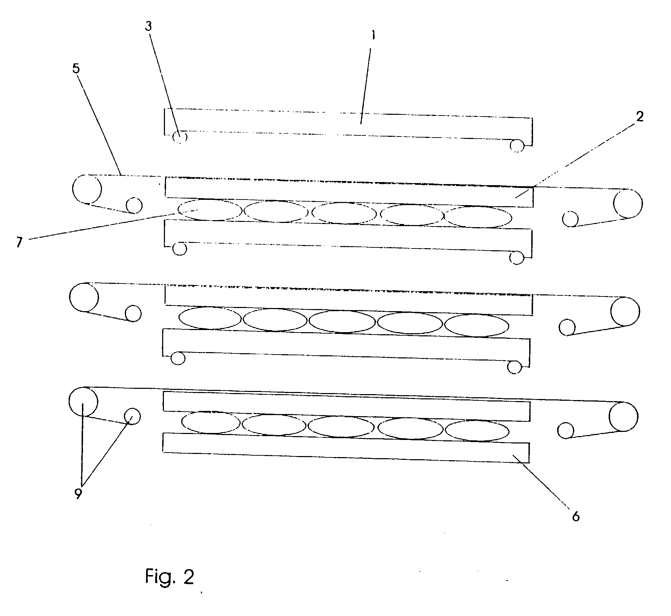

Um den auf dem Filtertuch 5 sich ansammelnden Filterkuchen zu beseitigen, können die Schläuche 7 evakuiert werden, indem das Druckmedium aus den Schläuchen 7 herausgepumpt wird. Ebenso ist es möglich durch Öffnen eines Ventils in der Verteilereinrichtung 12 das aus den unter Eigenspannung und Gewichtslast der Filterplatte 2 stehenden Schläuche 7 befindliche Druckmedium entweichen zu lassen (Fig. 2).

Nach Absenken der Filterplatte 2 kann das Filtertuch 5 seitwärts über Rollelemente 9 geführt verfahren werden, so daß der Filterkuchen abgeschieden wird. Dabei ist es möglich, daß das Filtertuch 5 nach Abscheidung des Filterkuchens zurückgefahren wird oder auf den Rollelementen 9 verbleibt. Beim Zurückfahren des Filtertuches 5 ist eine Reinigung des Filtertuches mittels eines Druckmediums durch eine zwischen den Rollelementen 9 angebrachte Bedüsung möglich. Unter Druckbeaufschlagung der Schläuche 7 fährt die Filterplatte 2 entlang der an der Seite der Filterplatte 2 angeordneten Führungsschienen nach oben in Richtung Deckplatte 1, so daß die Längsebene der Filterplatte 2 im wesentlichen durch die mittels der durch Schläuche 7 bedingte gleichmäßige Kraftbeaufschlagung mit der Längsachse 11 der Deckplatte 1 parallel ausgerichtet ist und einen gleichbleibenden Abstand aufweist.

Ebenso ist es möglich, jedoch nicht erforderlich oder zwingend, daß die Dichtungselemente 3 mit derselben Druck erzeugenden Einrichtung in Verbindung stehen, welche gleichfalls die Schläuche 7 mit Druck beaufschlagen. Jedoch ist es auch möglich, daß die Dichtungselemente 3 getrennt an eine Druck erzeugende Einrichtung gekoppelt sind.

Steuereinrichtungen, welche die Druck erzeugenden Einrichtungen, die die Filtrationskammer 4 mit Filtrationslösung versorgenden Pumpen etc. steuern, werden nicht weitergehend beschrieben, da diese Steuereinrichtung herkömmliche und hinlänglich dem Fachmann bekannt sind.

Von Vorteil zeigt es sich, daß die erfindungsgemäßen Filtrationsanlage auch derartig gefahren werden kann, daß die zuzuführende Flüssigkeit entweder unter Druck durch die Filtermittel 5 betrieben oder unter Ansetzen von Vakuum auf der Ausgangsseite der Filterplatte 2 betrieben werden kann.

Die erfindungsgemäße Filtrationsanlage verbindet die optimalen Filtrationseigenschaften einer Drucknutsche im Labormaßstab mit den Anforderungen des Industriebetriebes. Das druckbeaufschlagte Schlauchsystem zum Heben und Senken der Filterplatte bei nahezu idealer Kraftverteilung kombiniert mit einer Verfahrbarkeit des Filtermediums zum Austragen des Feststoffes und anschließender Reinigung des Filtertuches in kürzester Zeit gewährleistet eine extrem geringe Tot- und somit hohe Betriebszeit. Die Einfachheit der erfindungsgemäßen Filtrationsanlage z.B. durch die Verwendung leicht auswechselbarer Schläuche für das Hubsystem der Filterplatte und leicht zu ersetzender Filtertücher für je eine Filtrationseinrichtung führen zu einer extrem hohen Verfügbarkeit.

Durch Kopplung weiterer Filtrationseinrichtungen läßt sich die Filtrationsanlage bei einer erforderlichen Erhöhung der Kapazität leicht den Erfordernissen anpassen. Eine Computersteuerung der Filtrationsanlage ermöglicht eine optimale Anpassung der einzelnen Arbeitstakte an den erforderlichen Betrieb, Umstände also, die für den Fachmann unerwarteterweise die bekannten Nachteile des Stands der Technik beseitigen und in geradezu idealer Weise die Vorteile der erfindungsgemäßen Filtrationsanlage verbinden.

## Patentansprüche

1. Filtrationsanlage zur Trennung von Feststoflieilchen aus Flüssigkeiten mit einer horizontalen Deckplatte (1) und einer an der Unterseite der Deckplatte (1) angeordneten Filtrationseinrichtung (10), wobei die Filtrationseinrichtung (10) flexible Dichtungselemente (3) und eine Filterplatte (2) umfaßt, die im wesentlichen parallel zu der Deckplatte (1) ausgerichtete Filterplatte (2) senkrecht zu der Längsachse (11) der Deckplatte (1) beweglich ist, die Dichtungselemente (3) zwischen der Deckplatte (1) und der Filterplatte (2) unter Bildung einer Filtrationskammer (4) angeordnet, ein Filtermittel (5) zwischen den Dichtungselementen (3) und der Filterplatte (2) angeordnet, eine Standplatte (6) sich unterhalb der Filterplatte (2) befindet und von der Filterplatte (2) beabstandet ist, **dadurch gekennzeichnet,** daß mehrere flexible Hubelemente (7) zwischen der Filterplatte (2) und der Standplatte (6) angeordnet sind und mit einer Druck erzeugenden Einrichtung druckmediummäßig in Verbindung stehen.

2. Filtrationsanlage zur Trennung von Feststoffteilchen aus Flüssigkeiten nach Anspruch 1, **dadurch gekennzeichnet,** daß die flexiblen Hubelemente (7) mittels Druckbeaufschlagung derart verformbar sind, daß der Abstand zwischen der Deckplatte (1) und der Filterplatte (2) veränderbar ist.

3. Filtrationsanlage zur Trennung von Feststoflieilchen aus Flüssigkeiten nach Anspruch 1 oder 2, **dadurch gekennzeichnet,** daß die flexiblen Hubelemente (7) Formkissen sind.

4. Filtrationsanlage zur Trennung von Feststoffteilchen aus Flüssigkeiten nach einem der Ansprüche 1 bis 3, **dadurch gekennzeichnet,** daß die flexiblen Hubelemente (7) Schläuche sind.

5. Filtrationsanlage zur Trennung von Feststoffteilchen aus Flüssigkeiten nach Anspruch 4 , **dadurch gekennzeichnet,** daß bei Beaufschlagung der Schläuche (7) mit einem definierten Druck die Schläuche (7) einen in etwa übereinstimmenden Durchmesser im Querschnitt aufweisen.

6. Filtrationsanlage zur Trennung von Feststoffteilchen aus Flüssigkeiten nach einem der Ansprüche 4 bis 5, **dadurch gekennzeichnet,** daß die Schläuche (7) in etwa parallel zueinander angeordnet sind.

7. Filtrationsanlage zur Trennung von Feststoffteilchen aus Flüssigkeiten nach einem der Ansprüche 4 bis 6, **dadurch gekennzeichnet,** daß die Schläuche (7) mäanderförmig, und / oder kreisförmig angeordnet sind.

8. Filtrationsanlage zur Trennung von Feststoffteilchen aus Flüssigkeiten nach einem der Ansprüche 4 bis 7, **dadurch gekennzeichnet,** daß die Schläuche (7) untereinander druckmediummäßig in Verbindung stehen.

9. Filtrationsanlage zur Trennung von Feststoffteilchen aus Flüssigkeiten nach einem der Ansprüche 4 bis 8, **dadurch gekennzeichnet,** daß die Schläuche (7) mittels der Druck erzeugenden Einrichtung über ein Druckmedium beaufschlagbar sind.

10. Filtrationsanlage zur Trennung von Feststoffteilchen aus Flüssigkeiten nach einem der Ansprüche 1 bis 9, **dadurch gekennzeichnet,** daß die flexiblen Dichtungselemente (3) als flexible Schläuche ausgestaltet sind.

11. Filtrationsanlage zur Trennung von Feststoffteilchen aus Flüssigkeiten nach Anspruch 10, **dadurch gekennzeichnet,** daß die flexiblen Dichtungselemente (3) mit einer Druck erzeugenden Einrichtung druckmediummäßig in Verbindung stehen.

12. Filtrationsanlage zur Trennung von Feststoffteilchen aus Flüssigkeiten nach einem der Ansprüche 1 bis 11, **dadurch gekennzeichnet,** daß die Filtrationsanlage zwei oder mehrere Filtrationseinrichtungen (10) aufweist.

13. Filtrationsanlage zur Trennung von Feststoffteilchen aus Flüssigkeiten nach Anspruch 12, **dadurch gekennzeichnet,** daß die Standplatte (6) der einen Filtrationseinrichtung (10) derartig als Deckplatte (1) ausgebildet ist, daß eine weitere Filtrationseinrichtung (10) an der Unterseite dieser Deckplatte (1) angeordnet ist.

14. Filtrationsanlage zur Trennung von Feststoffteilchen aus Flüssigkeiten nach Anspruch 12 oder 13 , **dadurch gekennzeichnet,** daß die Filtratabläufe der Filtrationseinrichtungen (10) in eine gemeinsame Ausgangsleitung münden.

15. Filtrationsanlage zur Trennung von Feststoffteilchen aus Flüssigkeiten nach Anspruch 12 oder 13, **dadurch gekennzeichnet,** daß der Filtratablauf der einen Filtrationseinrichtung (10) mit den Zugangsleitungen der Filtrationskammer (4) der anderen Filtrationseinrichtung (10) in Verbindung steht.

## Claims

1. Filtration system for removing solid particles from liquids with a horizontal cover plate (1) and a filtration device (10) located on the underside of the cover plate (1) whereby the filtration device (10) comprises flexible sealing elements (3) and a filter plate (2) which filter plate (2) is aligned so as to be movable essentially parallel to the cover plate (1) perpendicularly relative to the longitudinal axis (11) of the cover plate (1), the sealing elements (3) between the cover plate (1) and filter plate (2) forming a filtration chamber (4), a filter unit (5) located between the sealing elements (3) and filter plate (2), a base plate (6) located underneath the filter plate (2) and at a distance from the filter plate (2), **characterised in that** there are several flexible lifting elements (7) between the filter plate (2) and base plate (6) connected via a pressure medium to a pressure-generating device

2. Filtration system for removing solid particles from liquids according to claim 1, **characterised in that** the flexible lifting elements (7) are capable of being deformed when pressure-loaded, in such a way that the distance between the cover plate (1) and filter plate (2) is rendered variable.

3. Filtration system for removing solid particles from liquids according to claim 1 or 2, **characterised in that** the flexible lifting elements (7) assume the form of moulded cushions.

4. Filtration system for removing solid particles from liquids according to any of the claims 1 to 3, **characterised in that** the flexible lifting elements (7) assume the form of tubes.

5. Filtration system for removing solid particles from liquids according to claim 4, **characterised in that** loading of the tubes (7) with a defined pressure results in the tubes (7) revealing an approximately identical diameter in the cross-sectional area.

6. Filtration system for removing solid particles from liquids according to any of the claims 4 to 5, **characterised in that** the tubes (7) are arranged approximately parallel to one another.

7. Filtration system for removing solid particles from liquids according to any of the claims 4 to 6, **characterised in that** the tubes (7) form a meander-shaped and/or circular arrangement.

8. Filtration system for removing solid particles from liquids according to any of the claims 4 to 7, **characterised in that** the tubes (7) are interconnected via a pressure medium.

9. Filtration system for removing solid particles from liquids according to any of the claims 4 to 8, **characterised in that** the tubes (7) are acted upon by a pressure-generating device via a pressure medium.

10. Filtration system for removing solid particles from liquids according to any of the claims 1 to 9, **characterised in that** the flexible sealing elements (3) are designed in the form of flexible tubes.

11. Filtration system for removing solid particles from liquids according to claim 10, **characterised in that** the flexible sealing elements (3) are connected via a pressure medium to a pressure-generating device.

12. Filtration system for removing solid particles from liquids according to any of the claims 1 to 11, **characterised in that** the filtration system reveals two or more filtration devices (10).

13. Filtration system for removing solid particles from liquids according to claim 12, **characterised in that** the base plate (6) of one filtration device (10) is designed as a cover plate (1) in such a way that another filtration device (10) is located on the underside of that cover plate (1).

14. Filtration system for removing solid particles from liquids according to claim 12 or 13, **characterised in that** the filtrate drains of the filtration devices (10) open out into a common outlet line.

15. Filtration system for removing solid particles from liquids according to claim 12 or 13, **characterised in that** the filtrate drain on one of the filtration devices (10) is connected to the inlet lines of the filtration chamber (4) on the other filtration device (10).

## Revendications

1. Système de filtration pour la séparation de particules solides de liquides avec une plaque de recouvrement horizontale (1) et une installation de filtration (10) aménagée sur la face inférieure de la plaque de recouvrement (1), le dispositif de filtration (10) comprenant des éléments d'étanchéité flexibles (3) et une plaque de filtration (2), la plaque de filtration (2) sensiblement parallèle à la plaque de recouvrement (1) se déplaçant perpendiculairement à l'axe longitudinal (11) de la plaque de recouvrement (1), les éléments d'étanchéité (3) étant situés entre la plaque de recouvrement (1) et la plaque de filtration (2) en formant une chambre de filtration (4), un média de filtration (5) se trouvant entre les éléments d'étanchéité (3) et la plaque de filtration (2), une plaque fixe (6) étant située sous la plaque de filtration (2) et à une certaine distance de la plaque de fixation (2), **caractérisé en ce que** plusieurs éléments de levage flexibles (7) se trouvent entre la plaque de filtration (2) et la plaque fixe (6) et sont reliés par un fluide de pression à une installation génératrice de pression.

2. Système de filtration pour la séparation de particules solides de liquides selon la revendication 1, **caractérisé en ce que** les éléments de levage flexibles (7) sont déformables par mise sous pression de manière telle que l'écart entre la plaque de recouvrement (1) et la plaque de filtration (2) est modifiable.

3. Système de filtration pour la séparation de particules solides de liquides selon la revendication 1 ou 2, **caractérisé en ce que** les éléments de levage flexibles (7) sont des coussins de forme.

4. Système de filtration pour la séparation de particules solides de liquides selon les revendications 1 à 3, **caractérisé en ce que** les éléments de levage flexibles (7) sont des flexibles.

5. Système de filtration pour la séparation de particules solides de liquides selon la revendication 4, **caractérisé en ce que** pour la mise sous pression des flexibles (7) avec une pression définie, les flexibles (7) présentent des diamètres de section approximativement correspondante.

6. Système de filtration pour la séparation de particules solides de liquides selon les revendications 4 à 5, **caractérisé en ce que** les flexibles (7) sont approximativement parallèles.

7. Système de filtration pour la séparation de particules solides de liquides selon les revendications 4 à 6, **caractérisé en ce que** les flexibles (7) sont placés en forme de méandre et / ou de cercle.

8. Système de filtration pour la séparation de particules solides de liquides selon les revendications 4 à 7, **caractérisé en ce que** les flexibles (7) sont reliés entre eux par un fluide de pression.

9. Système de filtration pour la séparation de particules solides de liquides selon les revendications 4 à 8, **caractérisé en ce que** les flexibles (7) peuvent être mis sous pression par un fluide de pression au moyen de l'installation génératrice de pression.

10. Système de filtration pour la séparation de particules solides de liquides selon les revendications 1 à 9, **caractérisé en ce que** les éléments d'étanchéité flexibles (3) sont des tuyaux flexibles.

11. Système de filtration pour la séparation de particules solides de liquides selon la revendication 10, **caractérisé en ce que** les éléments d'étanchéité flexibles (3) sont reliés par le fluide de pression à l'installation génératrice de pression.

12. Système de filtration pour la séparation de particules solides de liquides selon les revendications 1 à 11, **caractérisé en ce que** le système de filtration présente deux ou plusieurs installations de filtration (10)

13. Système de filtration pour la séparation de particules solides de liquides selon la revendication 12, **caractérisé en ce que** la plaque fixe (6) de l'une des installations de fixation (10) a la forme d'une plaque de recouvrement (1) de telle sorte qu'une autre installation de filtration (10) est située sur la face inférieure de cette plaque de recouvrement (1).

14. Système de filtration pour la séparation de particules solides de liquides selon la revendication 12 ou 13, **caractérisé en ce que** les évacuations des produits de filtration des installations de filtration (10) débouchent dans une conduite de sortie commune.

15. Système de filtration pour la séparation de particules solides de liquides selon la revendication 12 ou 13, **caractérisé en ce que** l'évacuation des produits de filtration d'une installation de filtration (10) est reliée aux conduites d'amenée de la chambre de filtration (4) de l'autre installation de filtration (10).
